# EUROPÄISCHE PATENTSCHRIFT

(11) **EP 1 286 058 B1**
(45) Veröffentlichungstag und Bekanntmachung des Hinweises auf die Patenterteilung: **19.03.2008**
(21) Anmeldenummer: 02016718.5
(22) Anmeldetag: 26.07.2002
(51) Int. Cl.: F15B 11/17, B29C 45/82, F04B 23/04, F04B 49/06

(54) **Hydrauliksystem für Spritzgiessmaschinen**
Hydraulic system for injection moulding machines
Système hydraulique pour des machines à moulage par injection

(30) Priorität: 23.08.2001 DE 10141351
(43) Veröffentlichungstag der Anmeldung: 26.02.2003
(73) Patentinhaber: Demag Ergotech GmbH, 90571 Schwaig (DE)
(72) Erfinder: Schienbein, Oliver, 06571 Wiehe (DE); Kanter, Matthias, 99510 Obertrebra (DE)
(74) Vertreter: Wilhelm, Ludwig

(56) Entgegenhaltungen:
- DE-A1- 19 621 907
- FR-A- 1 259 023
- US-A- 4 819 430
- US-A- 5 852 934
- US-B1- 6 176 083
- PATENT ABSTRACTS OF JAPAN Bd. 1998, Nr. 01, 30. Januar 1998 (1998-01-30) & JP 09 235759 A (SHIN CATERPILLAR MITSUBISHI LTD), 9. September 1997 (1997-09-09)
- PATENT ABSTRACTS OF JAPAN Bd. 017, Nr. 671 (M-1525), 10. Dezember 1993 (1993-12-10) & JP 05 223060 A (MITSUBISHI HEAVY IND LTD), 31. August 1993 (1993-08-31)
- PATENT ABSTRACTS OF JAPAN Bd. 2000, Nr. 11, 3. Januar 2001 (2001-01-03) & JP 2000 227093 A (EBARA CORP; EBARA DENSAN LTD), 15. August 2000 (2000-08-15)
- PATENT ABSTRACTS OF JAPAN Bd. 005, Nr. 187 (M-098), 26. November 1981 (1981-11-26) & JP 56 107989 A (UCHIDA YUATSU KIKI KOGYO KK; others: 01), 27. August 1981 (1981-08-27)

## Beschreibung

Die Erfindung betrifft ein Hydrauliksystem, insbesondere für eine Spritzgießmaschine, gemäß dem Oberbegriff von Patentanspruch 1.

Ein Hydrauliksystem ist z.B. in FR 1259023 offenbart.

Aus der DE 196 21 907 A1 ist ein Hydrauliksystem, insbesondere für eine Spritzgießmaschine, bekannt. Bei diesem Hydrauliksystem sind zwei Verstellpumpen über jeweils eine Kupplung von einem Elektromotor antreibbar. Ausgangsseitig sind beide Verstellpumpen über ein Ventil zusammenschaltbar. An die Verstellpumpen sind über jeweils eine Druckleitung jeweils eine Anzahl von Verbrauchern über Ventile angeschlossen. Sind die Druckleitungen nicht zusammengeschaltet, ist ihr zugehöriger Druck im allgemeinen verschieden.

Nachteilig an diesem Hydrauliksystem ist, dass bei Lasteinbruch eines Verbrauchers die Versorgung des oder der anderen Verbraucher, die an derselben Verstellpumpe angeschlossen sind, nicht mehr gewährleistet wird. Sind die Druckleitungen beider Verstellpumpen zusammengeschaltet, so ist die Versorgung sämtlicher Verbraucher des Hydrauliksystems nicht mehr gewährleistet.

Der Erfindung liegt die Aufgabe zugrunde, ein gattungsgemäßes Hydrauliksystem zu schaffen, bei dem bei Lasteinbruch eines Verbrauchers die Versorgung des oder der anderen Verbraucher gewährleistet ist.

Diese Aufgabe wird gelöst durch die Merkmale des Anspruchs 1. Dazu ist bei dem erfindungsgemäßen Hydrauliksystem mindestens einem Verbraucher der ausgangsseitige Druck von mindestens zwei Verstellpumpen vorzugsweise über 2/2 Wegeventile zuschaltbar. Im Falle mehrerer Verstellpumpen sind diese einzeln oder gruppenweise zuschaltbar. Bricht der Druck in einer einer Verstellpumpe zugehörigen Druckleitung zusammen, wird eine einer anderen Verstellpumpe zugehörige Druckleitung aufgeschaltet. Sind zwei oder mehrere Druckleitungen zusammengeschaltet, so wird die Druckleitung mit Druckabfall weggeschaltet. Vorzugsweise weist das Hydrauliksystem zwei Verstellpumpen auf, deren ausgangsseitiger Druck zwei Verbrauchern über jeweils zwei Ventile zuschaltbar ist. Selbstverständlich kann das Hydrauliksystem mehr als zwei Verstellpumpen aufweisen, deren jeweiliger Ausgangsdruck allen Verbrauchern aufschaltbar ist. Im Anwendungsfall für Spritzgießmaschinen erweist es sich aber als Kompromiß zwischen Kosten und Nutzen, zwei Verbrauchern, der Schließeinheit und der Einspritzeinheit den Ausgangsdruck von zwei Verstellpumpen über jeweils zwei 2/2-Wegeventile zuschalten zu können. Werden bei einem der Verbraucher beide zugehörigen 2/2-Wegeventile geöffnet, so werden die beiden Druckniveaus der Verstellpumpen ausgeglichen, d. h. die Verstellpumpen zusammengeschaltet. Ein Vorteil des erfindungsgemäßen Hydrauliksystems ist, durch flexible Resourcenzuteilung auf wechselnde Leistungsaufteilung reagieren zu können. Der Hydraulikmittelbedarf einer Schließeinheit einer Spritzgießmaschine als Verbraucher beispielsweise variiert je nach eingesetztem Spritzgießwerkzeug. Je nach Hydraulikmittelbedarf wird die entsprechend in ihrer Förderleistung dazu passende Verstellpumpe eingesetzt. Für einen Hydraulikzylinder mit niedriger Hydraulikmittelaufnahme wird eine Verstellpumpe mit geringerer Förderleistung eingesetzt, um eine bessere Regeldynamik zu erzielen. Bei Hydraulikzylindern mit großem Hydraulikmittelvolumen werden beide Verstellpumpen zusammengeschaltet, um die Befüllzeit des Hydraulikzylinders und damit die Zykluszeit des Verbrauchers zu verringern. Je nach Anforderungen ist es dem Spritzgießmaschinenbetreiber daher möglich, einen energetisch günstigen Parallelbetrieb mehrerer Verbraucher oder eine Arbeitsgeschwindigkeitserhöhung durch Zusammenschaltung der Verstellpumpen zu wählen.

In einer vorteilhaften Ausgestaltung der Erfindung sind die Verstellpumpen elektrohydraulische Regelpumpen. Dazu wird von einem Drucksensor der jeweilige Ausgangsdruck der Regelpumpe aufgenommen und in ein Spannungssignal gewandelt. Das Spannungssignal ist eine Ist-Wert-Eingangsgröße in die Regelung. Elektrohydraulische Regelpumpen können durch ein auf den Einsatzfall individuell angepaßtes Rechnerprogramm gesteuert werden.

Vorzugsweise wird bei zusammengeschalteten Pumpen der Ist-Wert der Regelgröße einer ersten Pumpe einer zweiten Pumpe als Soll-Wert der Regelgröße vorgegeben. Beide Pumpen arbeiten dann im sogenannten "Master Slave Mode". Diese Ansteuerungsart beinhaltet den Vorteil, dass die Pumpen sich nicht in ihren Regelungsverhalten gegenseitig aufschaukeln oder gegeneinander arbeiten.

Bei getrennten Hydraulikkreisen ist hingegen vorzugsweise jede elektrohydraulische Regelpumpe eigenständig für sich druck- und förderstromregelbar.

Vorteilhafter Weise ist mindestens einem Verbraucher ein Druckspeicher zuschaltbar. Dadurch können die Verstellpumpen geringer dimensioniert werden, und dennoch kann kurzzeitig eine hohe Arbeitsgeschwindigkeit aufrechterhalten werden. Vorzugsweise ist der Druckspeicher der Einspritzeinheit einer Spritzgießmaschine zugeordnet, die eine hohe Leistungsaufnahme aufweist.

In einer bevorzugten Ausführungsform sind zwei Verstellpumpen beidseitig eines Elektromotors angeordnet. Sie können damit über kurze Wege mittels Kupplungen an ein umweltfreundliches Aggregat angeschlossen werden.

In einer vorteilhaften Ausgestaltung der Erfindung ist die Sollwertvorgabe der Regelgröße durch die entsprechende maximale Antriebsleistung des die Verstellpumpen antreibenden Aggregats begrenzt. Eine derartige Begrenzung ist möglich, da die Leistungsparameter der einzelnen Verstellpumpen ständig durch die Erfassung von Druck und Fördermenge bekannt sind. Eine Überlastung des Antriebsaggregats wird dadurch vermieden.

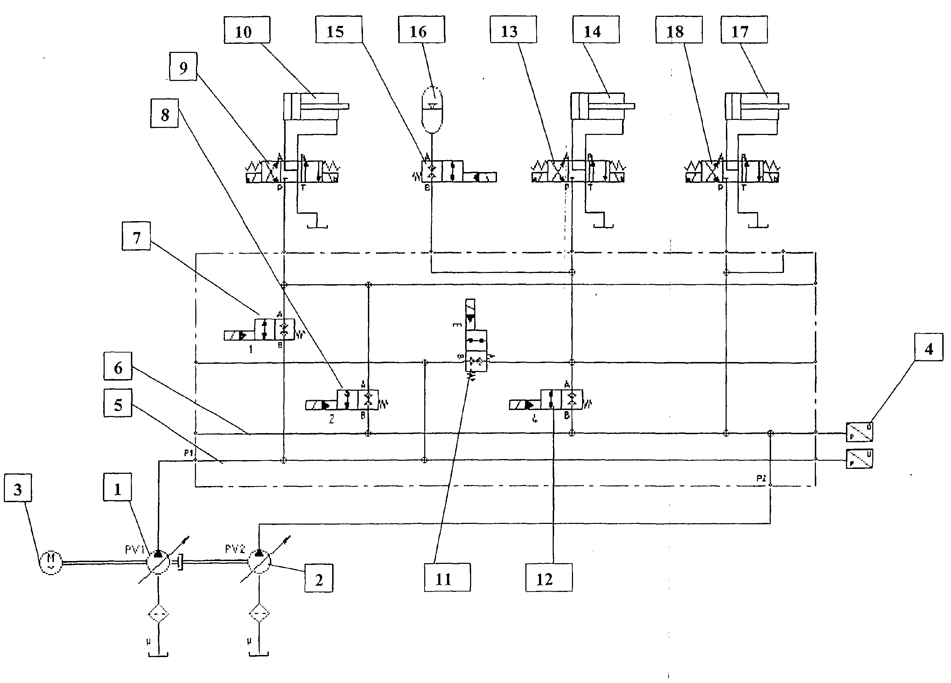

In einer Zeichnung ist eine Ausgestaltung der Erfindung dargestellt. Die einzige Figur zeigt einen Hydraulikschaltplan des erfindungsgemäßen Hydrauliksystems.

Zwei Verstellpumpen 1 und 2 werden von einem Elektromotor 3 angetrieben. Die Verstellpumpen 1, 2 werden elektronisch geregelt und bekommen dazu von einem Drucksensor mit Druck-Spannungs-Wandler 4 ein dem ausgangsseitigen Druck entsprechendes Spannungssignal. Der Ausgangsdruck p₁ und p₂ der Verstellpumpen 1 bzw. 2 in den Hydraulikleitungen 5 bzw. 6 ist im Allgemeinen verschieden. Die Verstellpumpen 1 und 2 sind jeweils über ein 2/2-Wegeventil 7 bzw. 8 mit einem 4/3-Wegeventil 9 zur Befüllung und Entleerung eines doppelwirkenden Hydraulikzylinders 10 einer Schließeinheit einer Spritzgießmaschine verbunden. Je nachdem, ob das Ventil 7 oder 8 geöffnet ist, ist das 4/3-Wegeventil 9 des Hydraulikzylinders 10 der Schließeinheit mit der Verstellpumpe 1 oder 2 verbunden, und am 4/3-Wegeventil 9 liegt der Druck p₁ oder p₂ an, d. h. der Hydraulikzylinder 10 wird bei geöffnetem 4/3-Wegeventil 9 mit dem Druck p₁ oder p₂ beaufschlagt. Sind beide Ventile 7 und 8 geöffnet, werden die beiden Hydraulikleitungen 5 und 6 bzw. die beiden Verstellpumpen 1 und 2 zusammengeschaltet. In beiden Hydraulikleitungen 5 bzw. 6 herrscht der ausgeglichene Druck p₁ = p₂ vor. Die Förderleistungen der beiden Verstellpumpen 1 und 2 werden jetzt zusammengefaßt, d. h. der Kolben des Hydraulikzylinders 10 wird mit größerer Geschwindigkeit gestellt. Ebenso sind die Verstellpumpen 1 und 2 jeweils über ein 2/2-Wegeventil 11 bzw. 12 mit einem 4/3-Wegeventil 13 zur Befüllung und Entleerung eines doppelwirkenden Hydraulikzylinders 14 einer Einspritzeinheit einer Spritzgießmaschine verbunden. Parallel zum 4/3-Wegeventil 13 zur Befüllung und Entleerung dieses doppelwirkenden Hydraulikzylinders 14 ist ein 2/2-Wegeventil 15 zum Laden eines Druckspeichers 16 geschaltet. Sind beide Ventile 11 und 12 geöffnet, werden die beiden Hydraulikleitungen 5 und 6 bzw. die beiden Verstellpumpen 1 und 2 zusammengeschaltet. In beiden Hydraulikleitungen 5 bzw. 6 herrscht wieder der ausgeglichene Druck p₁ = p₂ vor. Die Förderleistungen der beiden Verstellpumpen 1 und 2 werden jetzt wieder zusammengefaßt, d. h. der Kolben des Hydraulikzylinders 14 wird mit größerer Geschwindigkeit gestellt. Der Druck in den beiden Hydraulikleitungen 5 und 6 wird ausgeglichen, sobald bei einem der beiden Ventilpaare 7, 8 und 11, 12 beide Ventile 7 und 8 bzw. 11 und 12 geöffnet sind. Ein weiterer Verbraucher, z. B. Hydraulikzylinder 17 ist über ein 4/3-Wegeventil 18 direkt an die Druckleitung 6 angeschlossen. An diesem 4/3-Wegeventil 18 liegt daher immer der Druck p₂ der Verstellpumpe 2 an oder beim Zusammenschalten der Verstellpumpen 2 und 1 der Druck p₂ = p₁.

### Bezugszeichenliste

- 1: Verstellpumpe
- 2: Verstellpumpe
- 3: Elektromotor
- 4: Druck-Spannungs-Wandler
- 5: Hydraulikleitung
- 6: Hydraulikleitung
- 7: 2/2-Wegeventil
- 8: 2/2-Wegeventil
- 9: 4/3-Wegeventil
- 10: Hydraulikzylinder
- 11: 2/2-Wegeventil
- 12: 2/2-Wegeventil
- 13: 4/3-Wegeventil
- 14: Hydraulikzylinder
- 15: 2/2-Wegeventil
- 16: Druckspeicher
- 17: Hydraulikzylinder
- 18: 4/3-Wegeventil

## Patentansprüche

1. Hydrauliksystem, insbesondere für eine Spritzgießmaschine, mit mindestens zwei Verbrauchern, mindestens zwei Verstellpumpen (1, 2), mindestens einem Betätigungsventil für jeden Verbraucher und mindestens einem Ventil, mit dem mindestens zwei Verstellpumpen (1,2) ausgangsseitig zusammenschaltbar sind, **dadurch gekennzeichnet, dass** mindestens einem Verbraucher der ausgangsseitige Druck von mindestens zwei Verstellpumpen (1, 2) einzeln oder gruppenweise zuschaltbar ist.

2. Hydrauliksystem nach Anspruch 1, **dadurch gekennzeichnet, dass** die Verstellpumpen (1, 2) elektrohydraulische Regelpumpen sind.

3. Hydrauliksystem nach Anspruch 2, **dadurch gekennzeichnet, dass** der Ist-Wert der Regelgröße einer ersten Verstellpumpe (1) einer zweiten Verstellpumpe (2) als Soll-Wert der Regelgröße vorgegeben wird.

4. Hydrauliksystem nach Anspruch 2, **dadurch gekennzeichnet, dass** jede elektrohydraulische Regelpumpe eigenständig für sich druck- und förderstromregelbar ist.

5. Hydrauliksystem nach einem der vorstehenden Ansprüche, **dadurch gekennzeichnet, dass** den Verbrauchern der ausgangsseitige Druck von zwei Verstellpumpen (1, 2) über jeweils zwei Ventile zuschaltbar ist.

6. Hydrauliksystem nach einem der vorstehenden Ansprüche, **dadurch gekennzeichnet, dass** mindestens einem Verbraucher ein Druckspeicher (16) zuschaltbar ist.

7. Hydrauliksystem nach einem der vorstehenden Ansprüche, **dadurch gekennzeichnet, dass** zwei Verstellpumpen (1, 2) beidseitig eines Elektromotors (3) angeordnet sind.

8. Hydrauliksystem nach Anspruch 7, **dadurch gekennzeichnet, dass** die Sollwertvorgabe der Regelgröße durch die entsprechende maximale Antriebsleistung des die Verstellpumpen (1, 2) antreibenden Aggregats begrenzt ist.

## Claims

1. A hydraulic system, in particular for an injection moulding machine, comprising at least two consumers, at least two variable-displacement pumps (1, 2), at least one actuating valve for each consumer and at least one valve with which at least two variable-displacement pumps (1, 2) can be connected together on the output side, **characterised in that** the output-side pressure of at least two variable-displacement pumps (1, 2) can be switched individually or in groups to at least one consumer.

2. The hydraulic system according to claim 1, **characterised in that** the variable-displacement pumps (1, 2) are electrohydraulic control pumps.

3. The hydraulic system according to claim 2, **characterised in that** the actual value of the control variable of a first variable-displacement pump (1) is predefined as the desired value of the control variable of a second variable-displacement pump (2).

4. The hydraulic system according to claim 2, **characterised in that** the pressure and pump capacity of each electrohydraulic control pump can be regulated independently by itself.

5. The hydraulic system according to any one of the preceding claims, **characterised in that** the output-side pressure of two variable-displacement pumps (1, 2) can be switched to the consumers via two valves.

6. The hydraulic system according to any one of the preceding claims, **characterised in that** a pressure storage device (16) can be switched to at least one consumer.

7. The hydraulic system according to any one of the preceding claims, **characterised in that** two variable-displacement pumps (1, 2) are arranged on both sides of an electric motor (3).

8. The hydraulic system according to claim 7, **characterised in that** the desired value default of the control variable is limited by the corresponding maximum drive capacity of the unit driving the variable-displacement pumps (1, 2).

## Revendications

1. Système hydraulique, en particulier pour une machine de moulage par injection, comprenant au moins deux récepteur, au moins deux pompes à débit variable (1, 2), au moins une soupape d'actionnement pour chaque récepteur et au moins une soupape, à laquelle au moins deux pompes à débit variable (1, 2) peuvent être interconnectées côté sortie, **caractérisé en ce que** la pression côté sortie d'au moins deux pompes à débit variable (1, 2) peut être raccordée individuellement ou en groupe à au moins un récepteur.

2. Système hydraulique selon la revendication 1, **caractérisé en ce que** les pompes à débit variable (1, 2) sont des pompes à cylindrée variable électrohydrauliques.

3. Système hydraulique selon la revendication 2, **caractérisé en ce que** la valeur effective de la grandeur réglée d'une première pompe à débit variable (1) est appliquée à une seconde pompe à débit variable (2) comme valeur théorique de la grandeur réglée.

4. Système hydraulique selon la revendication 2, **caractérisé en ce que** la pression et le débit de sortie de chaque pompe à cylindrée variable électrohydraulique sont indépendamment en soi.

5. Système hydraulique selon l'une quelconque des revendications précédentes, **caractérisé en ce que** la pression côté sortie de deux pompes à débit variable (1, 2) peut être raccordée par l'intermédiaire de respectivement deux soupapes aux récepteurs.

6. Système hydraulique selon l'une quelconque des revendications précédentes, **caractérisé en ce qu'**un accumulateur de pression (16) peut être raccordé à au moins un récepteur.

7. Système hydraulique selon l'une quelconque des revendications précédentes, **caractérisé en ce que** deux pompes à débit variable (1, 2) sont disposées de part et d'autre d'un moteur électrique (3).

8. Système hydraulique selon la revendication 7, **caractérisé en ce que** l'application de la valeur théorique de la grandeur réglée est limitée par la puissance d'entraînement maximale correspondante du groupe d'entraînement des pompes à débit variable (1, 2).
